# EUROPEAN PATENT SPECIFICATION

(11) **EP 3 733 963 B1**
(45) Date of publication and mention of the grant of the patent: **13.04.2022**
(21) Application number: 19171557.2
(22) Date of filing: 29.04.2019
(51) Int. Cl.: D21F 3/02, D21G 1/02, F16C 13/02, F16C 13/00

(54) **SHOE ROLL PEDESTAL STRUCTURE**
SCHUHWALZENSTÄNDERSTRUKTUR
STRUCTURE DE SOCLE DE ROULEAU À SABOT

(43) Date of publication of application: 04.11.2020
(73) Proprietor: Valmet Technologies Oy, 02150 Espoo (FI)
(72) Inventor: LAMMINPARRAS, Sami, 41900 Petäjävesi (FI); YLÖNEN, Taneli, 41160 Tikkakoski (FI)
(74) Representative: TBK

(56) References cited:
- EP-A2- 1 820 900
- DE-A1-102007 053 555
- DE-A1-102012 205 187
- US-A1- 2006 180 426

## Description

The invention pertains to a shoe roll pedestal structure and in particular to a shoe roll pedestal structure having improvements with regard to accurately aligning a roll with a pedestal. Such a shoe roll pedestal structure is a sub assembly of a new kind of shoe roll end module developed by the applicant but not yet published.

From the prior art it is known to accommodate a pressure beam stub in a round hole of a rocker bearing, said rocker bearing being provided in a pedestal. In order to prevent inaccuracies in alignment of the shoe roll, contacting surfaces have to be machined with a certain degree of accuracy with turning work. While small clearances are unavoidable for purposes of manufacturing, these clearances may affect the accuracy of roll alignment.

Prior art document EP 1 820 900 A1 teaches using a pin member as a torque support. The pin member goes through a pedestal and a rocker-bearing ring into a support shaft. Thereby, a torque can be absorbed.

Document DE 10 2012 205 187 shows end structures of a shoe roll different to prior round journals. This document shows a square opening in a roll head to accommodate two parallel metal plates forming a pair of axle journals. There is no teaching about a pedestal nor about torque support.

Accordingly, there is a need for a roll pedestal structure enabling simpler manufacturing without a rocker bearing and enabling to handle torques occurring during pressing work while securing an improved degree of alignment accuracy of a roll with large and steady components.

In this document, the term 'axle hole' is used for a hole in a pedestal for an end part of pressure beam. Correspondingly, the term 'axle stub' is used for the end part of the pressure beam, and said beam is a stationary non rotating body.

At least one axle stub being hollow for arranging oil inlets and outlets of a shoe roll.

According to the invention, a shoe roll pedestal structure comprises a pedestal having an axle hole and an axle stub accommodated in the axle hole. The axle hole in section has a polygon shape. At least one of surfaces of the axle hole is a torque surface. Here, the term torque surface pertains to a surface, which is configured to be in direct planar contact with a corresponding surface of the axle stub.

A pedestal structure according to invention comprises also means for attaching a roll head to said pedestal so that the very same torque surface also positions the roll head accurately without any extra means. Said roll head is axially slidingly and rotatingly supported with a ferrule from the pedestal, which makes moves accurately parallel between the pedestal and the roll head although the axle may bend during loading.

There is a plane surface in the axle hole and a corresponding plane surface in the axle stub so that said pair of large plane surfaces easily bear the torque.

Moreover, since a rocker bearing can be omitted with the new shoe roll pedestal structure, a torque member can be arranged as a form locking structural part of the pedestal/stub. Thus, separate torque pins, which are prone to break, can be omitted.

Therefore, the invention enables a very simple way to get rid of a rocker bearing and provides a remarkably advantageous manner to handle torque/moment with planar forms between the stub and (hole of the) pedestal.

Moreover, the torque surface can be machined with a higher degree in accuracy (accurately machined) than the remaining surface, or surfaces of the axle hole. The axle stub in section has a polygon shape corresponding to the polygon shape of the axle hole. Each surface of the axle stub corresponding to one of the at least one torque surfaces of the axle hole can be also accurately machined. Furthermore, the torque surface is configured to be in abutment against the corresponding torque surface of the axle hole.

Here, the term accurately machined pertains to surface, which is machined with a higher degree in accuracy than the remaining surface or surfaces of the axle stub. A number of torque surfaces of the axle hole and the axle stub, respectively, is lower than a total number of surfaces of the axle hole and the axle stub, respectively.

Thus, according to the invention, a simply to manufacture polygonal section can be applied for the axle hole and the axle stub, respectively. However, in an advantageous manner the number of torque surfaces of the axle hole and the axle stub, respectively, to be preferably accurately machined, and to be in abutment with each other, can be reduced. The non-torque surfaces, which need not to be accurately machined, are not in abutment. Thus, there can be a play among these non-torque surfaces of the axle stub and the axle hole.

Moreover, it is to be noted that the terms "polygonal" or "polygon" are not to be understood in a geometrically perfect sense, but there can be a rounding or chamfer provided between the planar surfaces forming the polygon shape. These roundings can be used in the corners of the one or both of the pieces. When applied only to one of the pieces, the other may be polygon without roundings.

The polygon has roundings in at least one of its corners advantageously in all of it's corners for easing the fitting of these pieces.

It is to be noted that, in the sense of the invention, non-torque surfaces need not to be as accurately machined as that torque surfaces. That is, they can be machined with a lower degree of accuracy than the surfaces referred to as torque surfaces. These non-torque surfaces have smaller planar tolerance as well as roughness requirements than the torque surfaces.

Examples for the differences in accurately machining of the torque surfaces can be the evenness of the surfaces or the roughness of the surfaces. That is, a torque surface can have a higher degree of planar and parallel evenness and/or of roughness than a non-torque surface. For example, an average roughness Ra of the torque surface can have a range of 3 to 4 µm, while the non-torque surfaces can have an RA value of 6 to 16 µm.

Another example for the differences between the torque surfaces and the non-torque surfaces can be application of a coating to the torque surfaces, while there is no coating applied to the non-torque surfaces.

Advantageously, there can be a distance between the non-torque surfaces of the axle stub and the axle hole. This distance can be in the mm range, i.e. can be 1 mm or even more.

Moreover, advantageously, the axle stub can be pressed by means of one or more actuators such that the at least one torque surface of the axle stub is pressed against the corresponding torque surface of the axle hole.

By application of such actuators, excessive forces, which might occur during accidents or failures in the production process, can be met without a risk of causing misalignment.

In an advantageous manner, the actuators can be one or more working cylinders, screws, jacks, wedges or a combination of such elements.

Moreover, a positioning key can be arranged in a groove provided in the axle hole and in a groove provided in the axle stub.

Such a positioning key serves for accurately positioning the axle stub with respect to the axle hole.

Moreover, the groove provided in the axle hole can be provided in the torque surface of the axle hole, and the groove provided in the axle stub can be provided in the torque surface of the axle stub.

With such an arrangement, application of an actuator acting on the two torque surfaces from a side of the axle stub being opposite to the torque surface is facilitated. Moreover, there can be also secondary/semi torque surfaces which are very close to each other but have a certain clearance. In this case, for example upon an accident of the actuators, those secondary/semi torque surfaces can absorb the torque. This protects the loading means of the shoe roll by form locking with several surfaces.

In a further advantageous manner, each of the grooves can have at least two accurately machined side surfaces, the side surfaces being in abutment with the positioning key.

Moreover, in section each of the axle hole and the axle stub can have a shape of at least a pentagon, and the number of torque surfaces of the axle hole and the axle stub, respectively, can be between one and three.

That is, if the number of surfaces of the axle hole and the axle stub, respectively, is rather high, such as five or more, it is sensible to increase the number of torque surfaces up to three.

Alternatively, in section each of the axle hole and the axle stub can have a shape of a square or a rectangle, and the number of torque surfaces of the axle hole and the axle stub, respectively, is one or two.

If the number of surfaces of the axle hole and the axle stub, respectively, is rather limited, a reduced number of torque surfaces between one and two is sufficient.

It is also possible that the number of torque surfaces of the axle hole and the axle stub is two and one actuator acts on the axle stub in an oblique manner simultaneously pressing both of the torque surfaces of the axle stub against the corresponding torque surfaces of the axle hole.

Moreover, at least two torque surfaces of the axle stub and the corresponding torque surfaces of the axle hole can be arranged in a directly adjacent manner.

In an advantageous manner, the actuator can be provided as a pair of wedges accommodated in a recess of the pedestal and capable to be shifted against each other, thereby pressing on a non-torque surface (which can be of the axle stub).

Moreover, shifting of the wedges against each other can be effected by means of a screw being screwed into one of the wedges.

Thus, a shoe roll having such a shoe roll pedestal structure can be aligned in a facilitated manner. Moreover, if a press nip of the shoe roll is located on a side of the axle stub arranged opposite of the or one of the torque surfaces, this is an advantageous arrangement since the pressure forces of the press nip result in an increased pressure of the surfaces being in abutment on each other. Therefore, a smaller pressure force needs to be provided by the actuator.

Moreover, the shoe roll end module with support from the pedestal moves the support of the roll head further away from the stressed part of the axle where its profile changes from an axle stub to a support beam for a press shoe.

Further advantages of the invention will be better understood by studying the following description of a presently preferred embodiment together with the attached figure, in which:
Fig. 1 is a sectional view of a shoe roll head structure according to an embodiment of the invention.
Fig. 2 is a view corresponding to the view of Fig. 1 where a half of the shoe roll head structure is cut away.
Fig. 3 is a front view of the show roll head structure, and additionally shows a portion having a key in an increased manner.

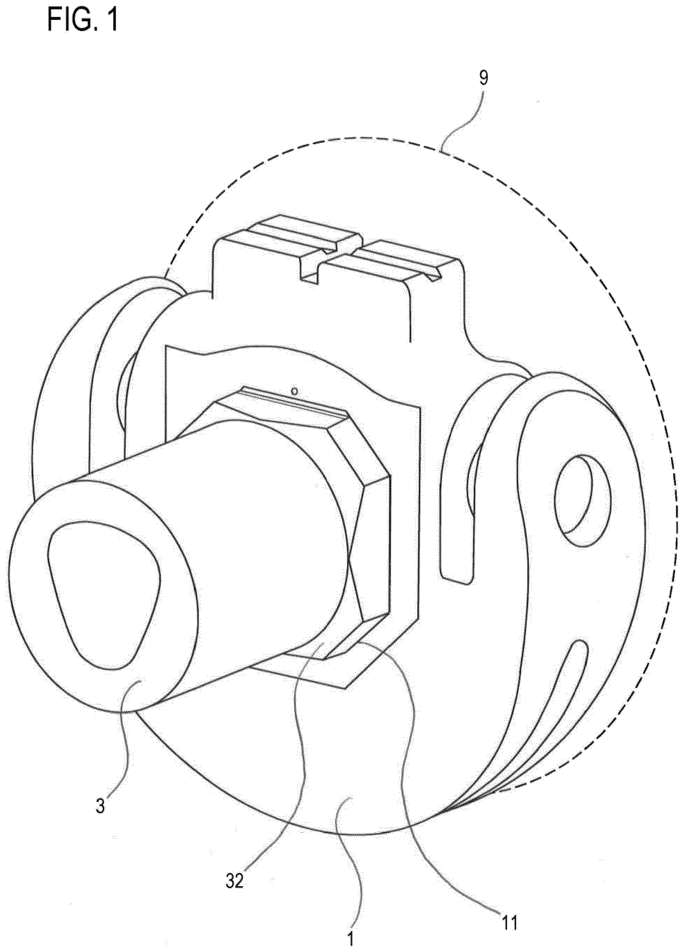

In the following, a preferred embodiment of the invention will be described by means of Figs. 1 to 3.

A shoe roll head (pedestal) structure according to the embodiment has a pedestal 1 comprising an axle hole 11. The axle hole accommodates an axle stub 3 of a shoe roll head 9. Note that the shoe roll head 9 is indicated by means of a dashed line in Fig. 1.

The axle hole 11 in section has an octagonal shape. The axle stub 3 having itself a circular shape has thickening 32 which has an octagonal shape more or less corresponding to the octagonal shape of the axle hole 11. In the following, where appropriate, for sake of convenience the surfaces of the thickening will be simply referred to as surfaces of the axle stub.

Among the eight surfaces of the axle hole 11, one surface 11a being in the lowermost position in the figures (in the following also referred to as six o'clock position) is machined with an accuracy degree exceeding that of the remaining seven surfaces. In particular, the accuracy degree pertains to planar and parallel evenness with regard to a reference surface being a non-torque surface, and to roughness of the surface 11a. That is, the surface 11a has a higher degree of planar evenness and parallelism and a lower roughness than the remaining seven surfaces of the axle hole. The lowermost position in the figures also corresponds to a lowermost position in an installation position of the shoe roll head structure. The surface 11a is a torque surface.

In a similar manner, the one surface 3a of the thickening 32 of the axle stub 3 being in the lowermost position in the figures (six o'clock position), which is configured to be arranged in abutment with the one surface 11a of the axle hole, is also machined with an accuracy degree exceeding that of the remaining seven surfaces. As it is the case with the surface 11a, the planar and parallel evenness of the surface 3a exceeds that of the other seven surfaces and the roughness of the surface 11a is lower than that of the other seven surfaces. The surface 3a is also a torque surface.

It is to be noted that the other seven surfaces of the axle stub 3 as well as of the axle hole 11 will be referred to as non accurately machined surfaces although they are of course machined with a certain degree of accuracy.

Moreover, the thickening 32 of the axle stub 3 is machined such that, when the axle stub 3 is inserted into the axle hole 11, there might be a small gap present between the other seven surfaces of the axle stub 3 and the other seven surfaces of the axle hole 9. In contrast, the one surface 11a of the axle hole and the one surface 3a of the axle stub are in perfect abutment without any gap or play etc.

In addition, it is to be mentioned that, since the torque surfaces 11a and 3a are arranged in the six o'clock position, in the embodiment forces occurring in the nip of the shoe roll are sensibly used to press the one surface 3a of the axle stub 3 against the one surface 11a of the axle hole 11. That is, in general a press nip of the shoe roll head 9 is arranged in a top position of the shoe roll head 9 (corresponding to a twelve o'clock position). Therefore, the pressure forces occurring in the press nip can be sensibly used to achieve the close abutting contact between the one surface 3a of the axle stub 3 and the one surface 11a of the axle hole 11. The above directions pertain to the drawings. However, in fact it is common to assemble the shoe roll above the counter roll which makes these directions inverse while the press nip is towards six o'clock.

Moreover, according to the embodiment the abutment between the one surface 3a of the axle stub 3 and the one surface 11a of the axle hole is caused by means of an actuator provided in a recess 17. The recess 17 is provided in the top surface 11b of the axle hole 11, which is located opposite of the one surface 11a of the axle hole 11, i.e. in a twelve o'clock position. The recess has a shape of a cuboid. While side surfaces and a top surface of the cuboid are formed by machining the recess into the material of the pedestal 1, a bottom surface of the recess is in fact formed by the top surface 3b of the axle stub.

In the recess 17 a wedge arrangement is provided. The wedge arrangement consists of a wedge 35 arranged on the top surface 3b of the axle stub 3, and of a wedge 15 arranged between the wedge 35 and the top surface of the recess 17. Oblique surfaces of the wedges 15 and 35 are in abutment with each other such that upon movement of the wedge 35 along a length axis towards an outer side of the pedestal 1 a self-locking effect of the wedges 15 and 35 occurs. Thereby, the pressure force causing the abutment of the one surfaces 3a and 11a is increased. Movement of the wedge 35 is effected by means of a screw 37 being in thread engagement with the wedge 35 and being accessible from the outer side of the pedestal.

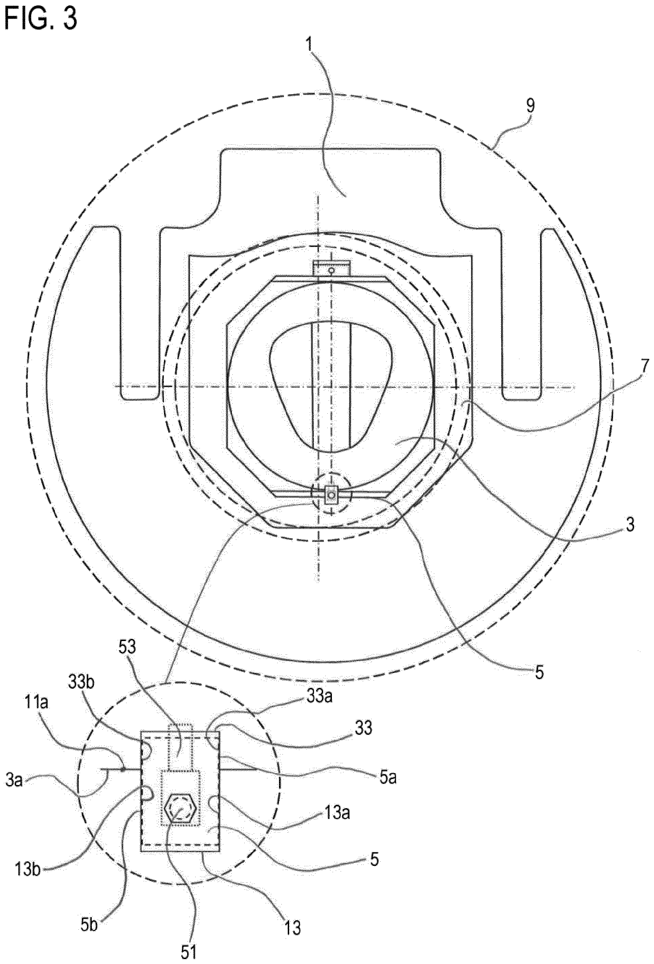

Moreover, according to the embodiment, a groove 13 is machined into the one surface 11a of the pedestal 1, and a groove 33 is machined into the one surface 3a of the axle stub. As can be seen in particular from the enlarged portion in Fig. 3, these grooves 13 and 33 together form a key hole and accommodate a positioning key 5. The positioning key 5 has side surfaces 5a and 5b, which are in close abutment with inner side surfaces 33a, 13a and 33b, 13b, respectively of the key hole.

In a similar manner as the one surfaces 11a and 3a of the pedestal 1 and the axle stub 3, respectively, the inner side surfaces 33a, 13a and 33b, 13b are machined with a higher degree of accuracy than the remaining surfaces of the key hole and of the key 5. Thus, the key 5 is capable of exactly positioning the axle stub 3 with respect to the key hole 11. Thus, exact positioning of the axle stub with regard to the axle hole is possible in a facilitated manner.

For sake of completeness, as can be seen from the enlargement of Fig. 3, there is a gap between the top and lowermost surfaces of the key 5 and the respectively opposing top and lowermost surfaces of the key hole. A screw 51 serves to attach and position the key 5 within the key hole.

Accordingly, it is possible to achieve an exact positioning of the shoe roll's axle stub 3 with regard to the axle hole 11 without the necessity of a high effort for accurately machining of all of the surfaces of the axle hole 11 and the corresponding surfaces of the axle stub 3.

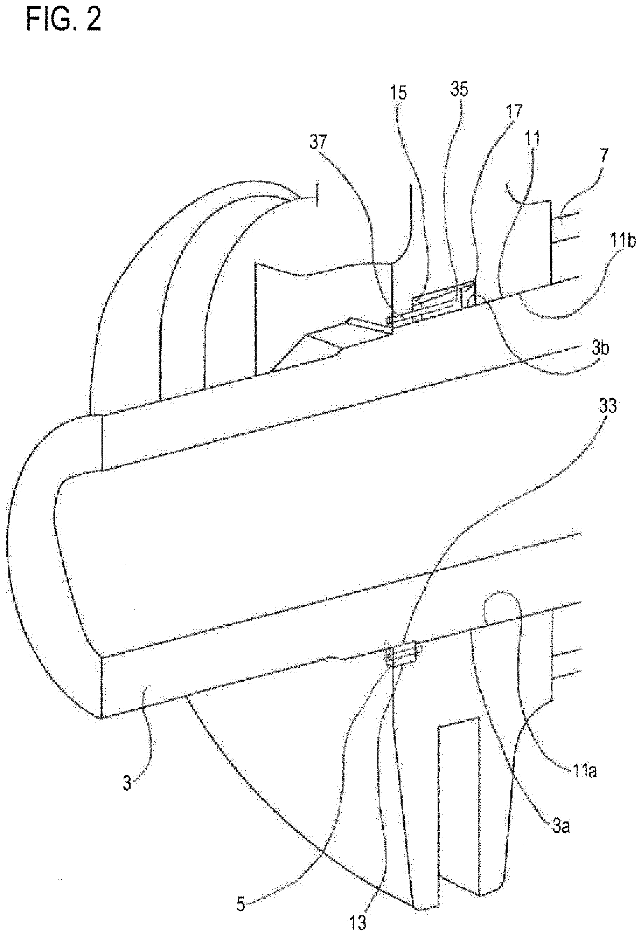

Moreover, visible in Fig. 3 by means of dashed lines is a ferrule 7 away from the stub side of the pedestal for supporting a roll head 9 outline. The ferrule 7 is eccentrically arranged with respect to the axle hole 11 and the axle stub 3, respectively. In addition, Fig. 2 shows a short cut of said ferrule which supports the roll head in a distance from the pedestal.

While the invention has been described by means of a presently preferred embodiment, it is to be understood that the scope of the invention is merely defined by the attached claims.

That is, for example, while in the embodiment the actuator has been described as a wedge arrangement, such a wedge arrangement can be replaced by other suitable means such as jacks, a screw arrangement or a piston arrangement. Moreover, instead of the screw causing the movement of the one wedge in the axial direction, such a movement can be caused for instance by means of a piston.

Reference signs list
- 1: pedestal
- 11: axle hole
- 11a: one surface of the axle hole (torque surface)
- 11b: top surface of the axle hole
- 13: groove provided in the one surface of the axle hole
- 13a, 13b: inner side surface
- 3: axle stub
- 32: thickening
- 3a: one surface of the axle stub (torque surface)
- 3b: top surface of the axle stub
- 33: groove provided in the one surface of the axle stub
- 33a, 33b: inner side surface
- 5: positioning key
- 5a, 5b: side surfaces
- 7: ferrule
- 9: shoe roll

## Claims

1. A shoe roll pedestal structure, comprising
a pedestal (1) having an axle hole (11);
the axle hole (11) being configured to accommodate an axle stub (3),
the axle hole (11) in section having a polygon shape, the polygon having a rounding in at least one of its corners,
wherein
at least one (11a) of the surfaces of the axle hole (11) is a torque surface, and
the at least one (11a) torque surface of the axle hole (11) is configured to be in abutment against a corresponding torque surface of the axle stub (3) having a polygon shape in section corresponding to the polygon shape of the axle hole.

2. The shoe roll pedestal structure according to claim 1, wherein
the number of torque surfaces (11a; 3a) of the axle hole (11) and the axle stub (3), respectively, is lower than a total number of surfaces of the axle hole (11) and the axle stub (3), respectively.

3. The shoe roll pedestal structure according to claim 1 or 2, wherein the axle hole (11) is configured such that there is a distance between the non-torque surfaces of the axle stub (3) and the axle hole (11).

4. The shoe roll pedestal structure according to any of claims 1 to 3, moreover comprising
the axle stub (3), wherein
the axle stub (3) is casted.

5. The shoe roll pedestal structure according to any of claims 1 to 4,moreover comprising the axle stub (3), wherein
the axle stub (3) is configured to be pressed by means of one or more actuators such that the at least one torque surface (3a) of the axle stub (3) is pressed against the corresponding torque surface (11a) of the axle hole (11).

6. The shoe roll pedestal structure according to claim 5, wherein
the actuators are one or more working cylinders, screws, jacks, wedges (15, 35) or a combination thereof.

7. The shoe roll pedestal structure according to claim 5 or 6, wherein
a positioning key (5) is arranged in a groove (13) provided in the axle hole (11) and in a groove (33) provided in the axle stub (3).

8. The shoe roll pedestal structure according to claim 7, wherein the groove (13) provided in the axle hole (11) is provided in the torque surface (11a) of the axle hole (11), and
the groove (33) provided in the axle stub (3) is provided in the torque surface (3a) of the axle stub (3).

9. The shoe roll pedestal structure according to any of claims 7 and 8, wherein
each of the grooves (13, 33) has at least two key side surfaces, the side key surfaces being in abutment with the positioning key (5).

10. The shoe roll pedestal structure according to any of the preceding claims, wherein
in section each of the axle hole (11) and the axle stub (3) have a shape of at least a pentagon, and
the number of torque surfaces of the axle hole (11) and the axle stub (3), respectively, is between one and three, wherein at least one torque surface is in parallel with a nip joint surface, or
in section each of the axle hole (11) and the axle stub (3) have a shape of a square or a rectangle, and
the number of torque surfaces of the axle hole (11) and the axle stub (3), respectively, is one or two.

11. The shoe roll pedestal structure according to claim 10, wherein
the number of torque surfaces of the axle hole (11) and the axle stub (3), is two, and one actuator acts on the axle stub (3) in an oblique manner simultaneously pressing both of the torque surfaces of the axle stub (3) against the corresponding torque surfaces of the axle hole (11).

12. The shoe roll pedestal structure according to any of claims 1 to 11, wherein
at least two torque surfaces of the axle stub (3) and the corresponding torque surfaces of the axle hole (11) are arranged in a directly adjacent manner and/or in an abutting manner.

13. The shoe roll pedestal structure according to any of claims 5 to 12, wherein
the actuator is provided as a pair of wedges (15, 35) accommodated in a recess (37) of the pedestal (1), and capable to be shifted against each other, thereby pressing on a non-torque surface (3b) of the axle stub (3).

14. The shoe roll pedestal structure according to claim 13, wherein
shifting of the wedges (15, 35) against each other is effected by means of a screw (37) being screwed into one of the wedges (35).

15. A shoe roll comprising
an axle configured to be incorporated into an axle hole of a pedestal,
a belt configured to be tensioned between the roll heads connected to the pedestals about the axle, and
a shoe roll pedestal structure according to any of claims 1 to 14.

## Patentansprüche

1. Schuhwalzenständerstruktur, umfassend
einen Sockel (1) mit einem Achsloch (11);
wobei das Achsloch (11) zur Aufnahme eines Achsstummels (3) ausgebildet ist,
wobei das Achsloch (11) im Schnitt die Form eines Polygons hat, das in mindestens einer seiner Ecken eine Abrundung aufweist, wobei
mindestens eine (11a) von den Oberflächen des Achslochs (11) eine Drehmomentfläche ist, und
die mindestens eine (11a) Drehmomentfläche des Achslochs (11) so konfiguriert ist, dass sie an einer entsprechenden Drehmomentfläche des Achsstummels (3) anliegt, der im Querschnitt eine Polygonform aufweist, die der Polygonform des Achslochs entspricht.

2. Schuhwalzenständerstruktur nach Anspruch 1, wobei
die Anzahl der Drehmomentflächen (11a; 3a) des Achslochs (11) bzw. des Achsstummels (3) geringer ist als die Gesamtzahl der Flächen des Achslochs (11) bzw. des Achsstummels (3).

3. Schuhwalzenständerstruktur nach Anspruch 1 oder 2, wobei
das Achsloch (11) so konfiguriert ist, dass zwischen den Nicht-Drehmomentflächen des Achsstummels (3) und dem Achsloch (11) ein Abstand vorhanden ist.

4. Schuhwalzenständerstruktur nach einem der Ansprüche 1 bis 3, ferner umfassend
den Achsstummel (3), wobei
der Achsstummel (3) gegossen ist.

5. Schuhwalzenständerstruktur nach einem der Ansprüche 1 bis 4, die außerdem den Achsstummel (3) umfasst, wobei
der Achsstummel (3) so konfiguriert ist, dass er mittels eines oder mehrerer Stellglieder gedrückt wird, so dass die mindestens eine Drehmomentfläche (3a) des Achsstummels (3) gegen die entsprechende Drehmomentfläche (11a) des Achslochs (11) gedrückt wird.

6. Schuhwalzenständerstruktur nach Anspruch 5, wobei
die Aktuatoren ein oder mehrere Arbeitszylinder, Schrauben, Zylinder, Keile (15, 35) oder eine Kombination davon sind.

7. Schuhwalzenständerstruktur nach Anspruch 5 oder 6, wobei ein Positionierungsschlüssel (5) in einer in dem Achsloch (11) vorgesehenen Nut (13) und in einer in dem Achsstummel (3) vorgesehenen Nut (33) angeordnet ist.

8. Schuhwalzenständerstruktur nach Anspruch 7, wobei
die in dem Achsloch (11) vorgesehene Nut (13) in der Drehmomentfläche (11a) des Achslochs (11) vorgesehen ist, und
die in dem Achsstummel (3) vorgesehene Nut (33) in der Drehmomentfläche (3a) des Achsstummels (3) vorgesehen ist.

9. Schuhwalzenständerstruktur nach einem der Ansprüche 7 und 8, wobei
jede der Nuten (13, 33) mindestens zwei Schlüsselseitenflächen aufweist, wobei
die Schlüsselseitenflächen an dem Positionierungsschlüssel (5) anliegen.

10. Schuhwalzenständerstruktur nach einem der vorhergehenden Ansprüche, wobei
das Achsloch (11) und der Achsstummel (3) im Querschnitt jeweils mindestens die Form eines Fünfecks aufweisen, und
die Anzahl der Drehmomentflächen des Achslochs (11) bzw. des Achsstummels (3) zwischen eins und drei liegt, wobei mindestens eine Drehmomentfläche parallel zu einer Nip-Fläche liegt, oder
das Achsloch (11) und der Achsstummel (3) im Querschnitt jeweils die Form eines Quadrats oder eines Rechtecks haben, und
die Anzahl der Drehmomentflächen des Achslochs (11) und des Achsstummels (3) jeweils eins oder zwei beträgt.

11. Schuhwalzenständerstruktur nach Anspruch 10, wobei
die Anzahl der Drehmomentflächen des Achslochs (11) und des Achsstummels (3) zwei beträgt und ein Stellglied in schräger Weise auf den Achsstummel (3) wirkt und gleichzeitig beide Drehmomentflächen des Achsstummels (3) gegen die entsprechenden Drehmomentflächen des Achslochs (11) drückt.

12. Schuhwalzenständerstruktur nach einem der Ansprüche 1 bis 11, wobei
mindestens zwei Drehmomentflächen des Achsstummels (3) und die korrespondierenden Drehmomentflächen des Achslochs (11) unmittelbar benachbart und/oder aneinanderstoßend angeordnet sind.

13. Schuhwalzenständerstruktur nach einem der Ansprüche 5 bis 12, wobei
das Stellglied als ein Paar von Keilen (15, 35) vorgesehen ist, die in einer Aussparung (37) des Sockels (1) untergebracht sind und gegeneinander verschoben werden können, wodurch sie auf eine Nicht-Drehmomentfläche (3b) des Achsstummels (3) drücken.

14. Schuhwalzenständerstruktur nach Anspruch 13, wobei die Verschiebung der Keile (15, 35) gegeneinander mittels einer Schraube (37) erfolgt, die in einen der Keile (35) eingeschraubt ist.

15. Schuhwalze mit
einer Achse, die so konfiguriert ist, dass sie in ein Achsloch eines Sockels eingebaut werden kann,
einem Riemen, der so konfiguriert ist, dass er zwischen den Rollenköpfen, die mit den Sockeln verbunden sind, um die Achse gespannt wird, und
einer Schuhwalzenständerstruktur nach einem der Ansprüche 1 bis 14.

## Revendications

1. Structure de socle de rouleau à sabot comprenant :
un socle (1) ayant un trou d'essieu (11) ;
le trou d'essieu (11) étant configurée pour loger un goujon d'essieu (3),
le trou d'essieu (11) ayant une forme polygonale en coupe, le polygone ayant un arrondi dans au moins l'un de ses coins,
dans laquelle au moins l'une (11a) des surfaces du trou d'essieu (11) est une surface de couple, et
la au moins une (11a) surface de couple du trou d'essieu (11) est configurée pour être en butée contre une surface de couple correspondante du goujon d'essieu (3) ayant une forme polygonale en coupe correspondant à la forme polygonale du trou d'essieu.

2. Structure de socle de rouleau à sabot selon la revendication 1, dans laquelle :
le nombre de surfaces de couple (11a ; 3a) du trou d'essieu (11) et du goujon d'essieu (3) respectivement est inférieur à un nombre total de surfaces du trou d'essieu (11) et du goujon d'essieu (3) respectivement.

3. Structure de socle de rouleau à sabot selon la revendication 1 ou 2, dans laquelle le trou d'essieu (11) est configuré de sorte qu'il y a une distance entre les surfaces sans couple du goujon d'essieu (3) et du trou d'essieu (11).

4. Structure de socle de rouleau à sabot selon l'une quelconque des revendications 1 à 3, comprenant de plus :
le goujon d'essieu (3), dans laquelle
le goujon d'essieu (3) est coulé.

5. Structure de socle de rouleau à sabot selon l'une quelconque des revendications 1 à 4, comprenant de plus le goujon d'essieu (3), dans laquelle :
le goujon d'essieu (3) est configuré pour être comprimé au moyen d'un ou de plusieurs actionneurs de sorte que la au moins une surface de couple (3a) du goujon d'essieu (3) est comprimée contre la surface de couple (11a) correspondante du trou d'essieu (11).

6. Structure de socle de rouleau à sabot selon la revendication 5, dans laquelle :
les actionneurs sont un ou plusieurs parmi les cylindres de travail, les vis, les vérins, les cales (15, 35) ou leur combinaison.

7. Structure de socle de rouleau à sabot selon la revendication 5 ou 6, dans laquelle :
une clé de positionnement (5) est agencée dans une gorge (13) prévue dans le trou d'essieu (11) et dans une gorge (33) prévue dans le goujon d'essieu (3).

8. Structure de socle de rouleau à sabot selon la revendication 7, dans laquelle la gorge (13) prévue dans le trou d'essieu (11) est prévue dans la surface de couple (11a) du trou d'essieu (11), et
la gorge (33) prévue dans le goujon d'essieu (3) est prévue dans la surface de couple (3a) du goujon d'essieu (3).

9. Structure de socle de rouleau à sabot selon l'une quelconque des revendications 7 et 8, dans laquelle :
chacune des gorges (13, 33) a au moins deux surfaces latérales de clé, les surfaces latérales de clé étant en butée avec la clé de positionnement (5).

10. Structure de socle de rouleau à sabot selon l'une quelconque des revendications précédentes, dans laquelle :
en coupe, chacun parmi le trou d'essieu (11) et le goujon d'essieu (3) a une forme d'au moins un pentagone, et
le nombre de surfaces de couple du trou d'essieu (11) et du goujon d'essieu (3), respectivement, est compris entre un et trois, dans laquelle au moins une surface de couple est en parallèle par rapport à une surface de jonction de pincement, ou bien
en coupe, chacun parmi le trou d'essieu (11) et le goujon d'essieu (3) a une forme de carré ou de rectangle, et
le nombre de surfaces de couple du trou d'essieu (11) et du goujon d'essieu (3), respectivement est d'un ou de deux.

11. Structure de socle de rouleau à sabot selon la revendication 10, dans laquelle :
le nombre de surfaces de couple du trou d'essieu (11) et du goujon d'essieu (3) est de deux, et un actionneur agit sur le goujon d'essieu (3) d'une manière oblique, comprimant simultanément à la fois les surfaces de couple du goujon d'essieu (3) contre les surfaces de couple correspondantes du trou d'essieu (11).

12. Structure de socle de rouleau à sabot selon l'une quelconque des revendications 1 à 11, dans laquelle :
au moins deux surfaces de couple du goujon d'essieu (3) et les surfaces de couple du trou d'essieu (11) sont agencées d'une manière directement adjacente et/ou en butée.

13. Structure de socle de rouleau à sabot selon l'une quelconque des revendications 5 à 12, dans laquelle :
l'actionneur est prévu sous la forme d'une paire de cales (15, 35) logées dans un évidement (37) du socle (1) et pouvant être décalées l'une contre l'autre, appuyant ainsi sur une surface sans couple (3b) du goujon d'essieu (3).

14. Structure de socle de rouleau à sabot selon la revendication 13, dans laquelle :
le décalage des cales (15, 35) l'une contre l'autre est effectué au moyen d'une vis (37) qui est vissée dans l'une des cales (35).

15. Rouleau à sabot comprenant :
un essieu configuré pour être incorporé dans un trou d'essieu d'un socle,
une courroie configurée pour être tendue entre les têtes de rouleau raccordées au socle autour de l'essieu, et
une structure de socle de rouleau à sabot selon l'une quelconque des revendications 1 à 14.
